# EUROPÄISCHE PATENTANMELDUNG

(11) **EP 0 901 020 A2**
(43) Veröffentlichungstag der Anmeldung: **10.03.1999**
(21) Anmeldenummer: 98250180.1
(22) Anmeldetag: 26.05.1998
(51) Int. Cl.: G01S 15/10, G01S 7/527, G01F 23/296, B08B 3/00

(54) **Vorrichtung und Verfahren zur Schlammpegelbestimmung in einem Absetzbecken**

(30) Priorität: 23.05.1997 DE 19722856
(71) Anmelder: Dr. Bruno Lange GmbH, D-14163 Berlin (DE)
(72) Erfinder: Battefeld, Manfred, 40211 Düsseldorf (DE); Gassner, Bernd, 41469 Neuss (DE); Kramp, Egbert Prof. Dr., 57080 Siegen (DE); Ueberbach, Otto, 40668 Meerbusch (DE)
(74) Vertreter: Christiansen, Henning, Dipl.-Ing.

(57) **Zusammenfassung**

Vorrichtung zur Bestimmung des Schlammpegels in einem Absetzbecken (3) einer Kläranlage, mit einem unterhalb des Flüssigkeitsspiegels angeordneten Schallsender (9) zur Abgabe eines hochfrequenten Schallimpulses in die Flüssigkeit und einem unterhalb des Flüssigkeitsspiegels angeordneten Schallempfänger (9), der zur Erfassung eines durch Reflexion und/oder Rückstreuung des Schallimpulses in der Flüssigkeit erzeugten Echosignals in derselben Phase (1) angeordnet ist wie der Schallsender (9), wobei der Schallempfänger (9) zur Erkennung des durch Reflexion und/oder Rückstreuung an der Phasengrenze erzeugten Echosignals ausgangsseitig mit einer Auswertungseinheit (10 bis 23) verbunden ist und zur Messung der Signallaufzeit zwischen der Abgabe des Schallimpulses und der Aufnahme des Echosignals ein Zeitmesser (15, 20) vorgesehen ist.

## Beschreibung

Die Erfindung betrifft eine Vorrichtung zur Bestimmung der Tiefe der Phasengrenze zwischen einer schwebstoffarmen Klarphase und einer darunter befindlichen feststoffreichen Phase in einer Flüssigkeit, insbesondere zur Bestimmung des Schlammpegels im Absetzbecken einer Kläranlage, gemäß dem Oberbegriff des Anspruchs 1 und ein entsprechendes Verfahren gemäß Anspruch 8.

Bisherige Schlammpegelmeßgeräte für Absetzbecken von Kläranlagen basieren auf optischen Meßverfahren. Hierbei wird eine Meßsonde mit zwei übereinander angeordneten Lichtschranken verwendet, die zur Bestimmung des Schlammpegels an einem Kabel in das Absetzbecken hineingelassen wird, wobei die Lichtschranken die Lichtabsorption der Flüssigkeit in zwei übereinander liegenden Flüssigkeitsschichten messen. Die Meßsonde wird dann soweit in das Absetzbecken herabgelassen, bis sich die obere Lichtschranke in der Klarphase befindet und demzufolge nur eine geringe Lichtabsorption mißt, während sich die untere Lichtschranke bereits in der feststoffreichen Phase befindet und dementsprechend eine große Lichtabsorption mißt. Die Tiefe des Schlammspiegels ergibt sich dann aus der abgespulten Kabellänge, die sich in einfacher Weise aus dem Durchmesser und der Anzahl der Umdrehungen der Kabeltrommel berechnen läßt.

Nachteilig hierbei ist die beim Herablassen bzw. Heraufziehen der Meßsonde auftretende mechanische Beanspruchung des Kabels, was im Extremfall zum Kabelbruch und damit zum Versagen des Meßgeräts und unter Umständen zu einer Beschädigung von Teilen der Kläranlage führen kann.

Ein weiterer Nachteil dieser bekannten Schlammpegelmeßgeräte besteht darin, daß die Meßsonde jedesmal hochgezogen werden muß, wenn der Räumer im Absetzbecken die Meßstelle passiert.

Darüber hinaus wird die Meßsonde im Betrieb relativ schnell verschmutzt, so daß es zur Vermeidung von Meßfehlern erforderlich ist, die Meßsonde zwischen den Meßvorgängen mit Wasser zu reinigen, was relativ aufwendig ist und im Winter zu einem Einfrieren führen kann.

Der Erfindung liegt somit die Aufgabe zugrunde, eine Vorrichtung bzw. ein Verfahren der eingangs genannten Art zu schaffen, das mit möglichst wenig bewegten Teilen auskommt und gegenüber Verschmutzungen möglichst wenig anfällig ist.

Die Aufgabe wird, ausgehend von einer Vorrichtung gemäß dem Oberbegriff des Anspruchs 1, durch die kennzeichnenden Merkmale des Anspruchs 1 bzw. - hinsichtlich des Verfahrens - durch die kennzeichnenden Merkmale des Anspruchs 8 gelöst.

Die Erfindung schließt die technische Lehre ein, zur Bestimmung der Phasengrenze in einer Flüssigkeit ein hochfrequentes Schallsignal in die Flüssigkeit einzukoppeln und das von einer Reflexion und/oder Rückstreuung in der Flüssigkeit herrührende Echosignal zu messen, um durch eine nachfolgende Signalauswertung zu ermitteln, ob das Echosignal an der Phasengrenze oder anderswo in der Flüssigkeit reflektiert bzw. rückgestreut wurde, so daß sich aus der entsprechenden Signallaufzeit die Tiefe der Phasengrenze in der Flüssigkeit ermitteln läßt.

Der Begriff Phasengrenze ist hierbei und im folgenden allgemein zu verstehen und nicht auf dessen engere technischphysikalische Bedeutung beschränkt, bei der zwei scharf abgegrenzte Phasen mit einer sprungartigen Eigenschaftsänderung an der Phasengrenze vorliegen. Vielmehr schließt der Begriff Phasengrenze auch kontinuierliche Übergänge ein, bei denen sich die Zustandsgrößen an der Phasengrenze nur langsam ändern.

Als Schallsignal zur Bestimmung der Phasengrenze eignet sich vorzugsweise ein Ultraschallsignal, da wegen der relativ kurzen Wellenlänge derartiger Signale eine gute Ortsauflösung bei der Bestimmung der Phasengrenze erreicht werden kann. So läßt sich bei einem Meßbereich zwischen 0,2 m und 12 m beispielsweise eine Ortsauflösung von mindestens 10 cm erreichen, was für die Schlammpegelbestimmung in Absetzbecken von Kläranlagen ausreicht.

Insbesondere bei einem Schallsignal im Ultraschallbereich ist es vorteilhaft, Impulspakete mit mehreren Impulsen anstelle einzelner Impulse zu erzeugen, da die gebräuchlichen Schallsender in der Regel eine bestimmte Zeit benötigen, um mechanisch einzuschwingen.

Das erfindungsgemäße Meßprinzip beruht auf der Erkenntnis, daß die Entstehung des Echosignals in der Flüssigkeit durch zwei physikalische Phänomene bestimmt wird, die beide von der Feststoffkonzentration in der Flüssigkeit abhängen, was die Bestimmung der Phasengrenze zwischen zwei Phasen mit unterschiedlichen Feststoffkonzentrationen ermöglicht.

Zum einen wird das in die Flüssigkeit abgegebene Schallsignal an einer Dichteänderung reflektiert, die beispielsweise von einer Änderung der Feststoffkonzentration in der Flüssigkeit herrühren kann. In diesem Fall ist die Intensität des Echosignals von dem Gradienten der Feststoffkonzentration abhängig. Bei einer gleichmäßigen Feststoffkonzentration würde nach diesem Modell somit kein Echosignal auftreten, was jedoch in der Realität nicht beobachtet werden kann, da auch das im folgenden beschriebene Phänomen ein Echosignal verursacht. Voraussetzung für die Gültigkeit dieses Modells ist, daß die Schallwellenlänge wesentlich größer ist als die Partikelgröße der in der Flüssigkeit befindlichen Feststoffe oder der mittlere Abstand der Partikel zueinander.

Zum anderen wird das in die Flüssigkeit abgegebene Schallsignal an den einzelnen Feststoffpartikeln gestreut, so daß die Intensität des Echosignals unter alleiniger Berücksichtigung dieses Modells proportional zur Feststoffkonzentration in der Flüssigkeit ist. Bei homogen in der Flüssigkeit verteilten Feststoffpartikeln müßte die Intensität des Echosignals unter Berücksichtigung von Vielfachstreuung und Absorption mit der Entfernung exponentiell abnehmen. Voraussetzung für die Gültigkeit dieses Modells ist, daß die Schallwellenlänge wesentlich kleiner ist als die Partikelgröße oder der mittlere Abstand zwischen den Feststoffpartikeln.

In der Praxis wird die Erzeugung des Echosignals jedoch in der Regel nicht von einem der beiden vorstehend beschriebenen Phänomene dominiert, sondern sowohl durch Reflexion als auch durch Streuung beeinflußt, da die Wellenlänge eines Ultraschallsignals mit λ=1,5 mm bei f=1 MHz grob der Länge einzelner Schlammflocken entspricht, die ungefähr 1 mm beträgt.

Entsprechend den beiden vorstehend beschriebenen physikalischen Phänomenen der Erzeugung des Echosignals bestehen zwei Möglichkeiten zur Auswertung des Echosignals, die im folgenden beschrieben werden.

In einer Variante der Erfindung wird die Stärke des Echosignals mit einem vorgegebenen Grenzwert verglichen, um beurteilen zu können, ob das in die Flüssigkeit abgegebene Schallsignal in der feststoffarmen oder in der feststoffreichen Flüssigkeitsphase rückgestreut wurde.

In der bevorzugten Ausführungsform dieser Variante erfolgt die Einkopplung des Schallsignals in die Flüssigkeit in der feststoffarmen Phase in Richtung der Phasengrenze zur feststoffreichen Phase, so daß die Stärke des Echosignals zunimmt, wenn das Schallsignal beim Überschreiten des Phasengrenze in der feststoffreichen Phase rückgestreut wird. In diesem Fall läßt sich die Phasengrenze in dem Echosignal also daran erkennen, daß die Stärke des Echosignals den vorgegebenen Grenzwert überschreitet.

In einer anderen Ausführungsform dieser Variante erfolgt die Einkopplung des Schallsignals in die Flüssigkeit dagegen in der feststoffreichen Phase in Richtung der Phasengrenze zur feststoffarmen Phase, so daß die Stärke des Echosignals abnimmt, wenn das Schallsignal die Phasengrenze überschreitet und dann in der feststoffarmen Phase rückgestreut wird. In diesem Fall läßt sich die Phasengrenze also daran erkennen, daß die Stärke des Echosignals den vorgegebenen Grenzwert unterschreitet.

In einer anderen Variante der Erfindung wird dagegen zur Erfassung von Reflexionen an der Phasengrenze nicht die Stärke des Echosignals ausgewertet, sondern die zeitliche Änderung der Stärke des Echosignals. Hierzu ist ein Differenzierer vorgesehen, der laufend die Steigung der Stärke des Echosignals berechnet. Anschließend wird dann der Zeitpunkt ermittelt, in dem die Steigung des Echosignals einen vorgegebenen Grenzwert überschreitet oder den größten Wert während des Meßvorgangs überhaupt aufweist.

Der Begriff Differenzierer ist hierbei ebenfalls allgemein zu verstehen und nicht auf Differenzierer im mathematischen Sinne beschränkt. So ist es beispielsweise möglich, das Echosignal zunächst zu digitalisieren und anschließend die Steigung der Verbindungslinie zwischen zwei oder mehr Stützstellen zu berechnen. Weiterhin ist es vorteilhaft, das Echosignal vor der Differenzierung zu glätten, da ein im Echosignal enthaltenes Rauschsignal andernfalls die Berechnung der Steigung verfälschen könnte. So wird das in die Flüssigkeit eingekoppelte Schallsignal an den einzelnen Feststoffpartikeln in der Flüssigkeit reflektiert bzw. gestreut, was aufgrund der positiven bzw. negativen Interferenzen zu einem verrauschten Echosignal führt. Bewegen sich die einzelnen Feststoffpartikel, wie es z.B. bei Flocken von Klärschlamm der Fall ist, so ist die Interferenzstruktur nicht reproduzierbar. Da die zur Bestimmung des Schlammpegels wichtige Information in der mittleren Echostärke und nicht in der Interferenzstruktur des Echosignals liegt, ist es vorteilhaft, das Echosignal über die Interferenzstrukturen hinweg zu glätten. Die Ansprechzeit für die Glättung darf jedoch nicht zu groß sein, da ansonsten die Ortsauflösung der Schlammpegelmessung verringert wird. Bei einer Sendefrequenz von 1 MHz und einer Dauer des Impulspakets von 25 µs führt eine Ansprechzeit der Glättung von 100 µs beispielsweise zu einer Ortsauflösung von 7,1 cm.

Die vorstehend beschriebene Auswertung des Echosignals ermöglicht die Erkennung der Phasengrenze in dem Echosignal. Zur Bestimmung des Abstandes zwischen Sender und Phasengrenze wird darüber hinaus die Zeitspanne zwischen der Abgabe des Schallsignals in die Flüssigkeit und der Erkennung der Phasengrenze in dem Echosignal gemessen. Hierzu ist ein Zeitmesser vorgesehen, der eingangsseitig mit dem Schallsender verbunden ist, um die Zeitmessung bei der Abgabe des Schallsignals zu starten. Die Zeitmessung wird dann angehalten bzw. die seit der Abgabe des Schallsignals verstrichene Zeit wird ausgelesen, wenn in dem Echosignal die Phasengrenze erkennbar ist. Aus der auf diese Weise gemessenen Signallaufzeit ergibt sich dann der gesuchte Abstand zwischen Sender und Phasengrenze.

In der bevorzugten Ausführungsform der Erfindung wird vor der Auswertung des Echosignals zunächst die entfernungsabhängige Abschwächung des Echosignals kompensiert.

So unterliegt ein Schallsignal bei der Ausbreitung in einer Flüssigkeit einer frequenzabhängigen Dämpfung, die bei einer parallelen Abstrahlung und einer parallelen Reflexion - also bei ein-dimensionaler Betrachtung - zu einer exponentiellen Abnahme der Signalstärke mit der Entfernung führen würde. So liegt die Dämpfung in einem Belebungsbekken einer Kläranlage bei einer Schallfrequenz von f=1 MHz bei ungefähr 1,8 ^{dB}/ₘ, wohingegen die Dämpfung von reinem Wasser mit 0,5 ^{dB}/ₘ wesentlich geringer ist.

Darüber hinaus nimmt die Intensität des Schallsignals außerhalb des Nahfeldes mit der Entfernung quadratisch ab, da sich das Schallsignal außerhalb des Nahfeldes als Kugelwelle ausbreitet.

In dieser Ausführungsform der Erfindung ist deshalb eine Recheneinheit vorgesehen, welche die Entfernungsabschwächung des Echosignals kompensiert. Zur Berücksichtigung der von dem Echosignal bis zum Empfang zurückgelegten Signallaufstrecke ist die Recheneinheit eingangsseitig mit dem Zeitmesser verbunden. Vorzugsweise berechnet die Recheneinheit aus der gemessenen Signallaufzeit einen Korrekturwert nach einer quadratischen Funktion, der dann mit dem Echosignal multipliziert wird.

Weiterhin ist es vorteilhaft, zunächst eine Vielzahl von Schlammpegelmessungen in der vorstehend beschriebenen Weise durchzuführen und anschließend einen Mittelwert der gemessenen Schlammpegel zu berechnen, um den Einfluß von Meßfehlern weitestgehend zu eliminieren.

In einer weiterbildenden Variante der Erfindung wird aus der Signallaufzeit und der Schallgeschwindigkeit direkt der Abstand zwischen dem Sender und der Phasengrenze berechnet und über eine Anzeigeeinheit ausgegeben, wobei die Schallgeschwindigkeit zuvor von der Vorrichtung selbständig berechnet wird, um Schwankungen der Schallgeschwindigkeit beispielsweise aufgrund von Temperaturänderungen zu berücksichtigen. Hierzu wird die Signallaufzeit zwischen der Abgabe eines Schallimpulses und dem Empfang des von der Reflexion am Beckenboden herrührenden Echosignals gemessen. Diese Signallaufzeit ermöglicht dann zusammen mit der als bekannt vorausgesetzten Beckentiefe die Berechnung der Schallgeschwindigkeit für eine nachfolgende Schlammpegelmessung.

In einer bevorzugten konstruktiven Ausführung der Erfindung sind der Schallsender und ein der Aufnahme des Echosignals dienender Schallempfänger in einem gemeinsamen Bauteil, dem Schallübertrager, integriert. Der Schallübertrager ist dabei eingangsseitig zwecks Zuführung des Schallimpulses mit einem Impulsgenerator sowie ausgangsseitig mit einer Auswertungseinheit, welcher das Echosignal übergeben wird, verbunden.

Bei einer besonders günstigen konstruktiven Ausführung ist ein Reinigungssystem für den Schallübertrager vorgesehen. Hierzu kann eine einfache Spüleinrichtung oder dergleichen vorgesehen sein, welche die Verschmutzungen unterworfene Schallaus- und -eintrittsfläche mittels eines oder mehrerer Strahlen einer Spülflüssigkeit etc. reinigt. Vorzugsweise wird dafür eine Wischervorrichtung eingesetzt, welche den Schallübertrager bei einem vorbestimmbaren Verschmutzungsgrad mittels eines Wischers oder dergleichen mechanisch reinigt. In einer anderen Variante erfolgt die Reinigung durch eine energiereiche Anregung des Schallübertragers mittels Schallwellen, vorzugsweise durch den Schallsender. Vorteilhafterweise wird dabei eine Ultraschallanregung vorgenommen, wobei bei einer geeigneten Anregungsfrequenz energiereiche Transversalwellen auf der Oberfläche des Schallübertragers erzeugt werden, die ein Lösen der dort anhaftenden Verschmutzungen bewirken. Die Reinigungsfrequenz liegt dabei um 25 bis 35 kHz, vorzugsweise etwa 30 kHz, unterhalb der Arbeitsfrequenz des Schallsenders.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung eine Vorrichtung zur Bestimmung des Schlammpegels im Absetzbecken einer Kläranlage als Blockschaltbild,
- Figur 2: eine alternative Ausführungsform einer derartigen Vorrichtung ebenfalls als Blockschaltbild,
- Figur 3: den Verlauf der Feststoffkonzentration in einem Klärbecken und den zugehörigen Verlauf des Echosignals,
- Figur 4: die Intensität eines Echosignals als Funktion über die Beckentiefe in einem Belebungsbecken mit einheitlicher Feststoffkonzentration;
- Figur 5: eine mechanische Reinigungsvorrichtung für einen Ultraschall-Übertrager als kombinierten Ultraschall-Sender und -Empfänger in schematischer Darstellung;
- Figur 6: einen Teilschnitt entlang Linie VI-VI aus Figur 5.

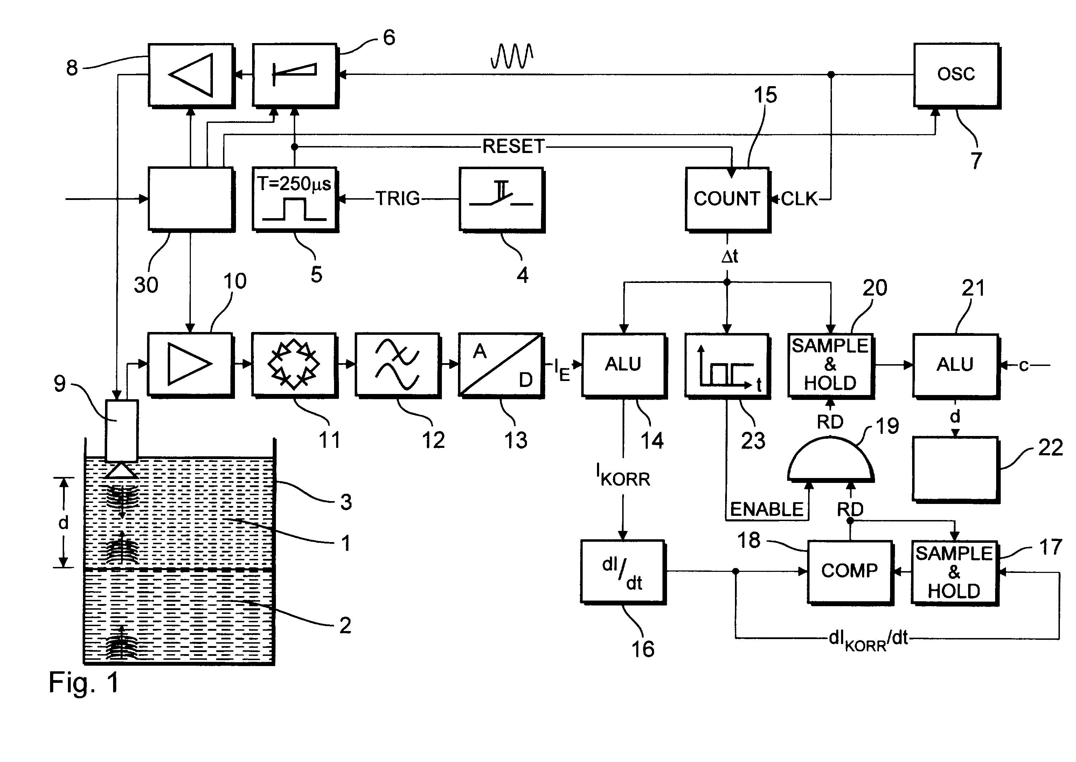

Die in Figur 1 gezeigte Vorrichtung ermöglicht die Bestimmung der Tiefe der Phasengrenze zwischen einer Klarphase 1 und einer feststoffreichen Schlammphase 2 in einem Absetzbecken 3 einer Kläranlage.

Zur Einleitung eines Meßvorgangs betätigt der Benutzer einen Taster 4, wodurch ein Impulsgenerator 5 zur Abgabe eines rechteckförmigen Impulses mit einer Dauer von T=250 µs angetriggert wird. Dieser Impuls wird einem Amplitudenmodulator 6 zugeführt und von diesem auf ein sinusförmiges Trägersignal mit der Frequenz f=200 kHz aufmoduliert, das von einem Oszillator 7 erzeugt wird. Bei jedem Meßvorgang erscheint am Ausgang des Amplitudenmodulators 6 also ein Impulspaket, das 50 Perioden des hochfrequenten Trägersignals umfaßt. Dieses Impulspaket wird dann über einen Leistungsverstärker 8 einem in dem Absetzbecken 3 knapp unterhalb des Flüssigkeitsspiegels angeordneten Ultraschall-Übertrager 9 zugeführt, der zunächst als Ultraschallsender fungiert und ein Ultraschallsignal senkrecht nach unten in die in dem Absetzbecken 3 befindliche Flüssigkeit einkoppelt.

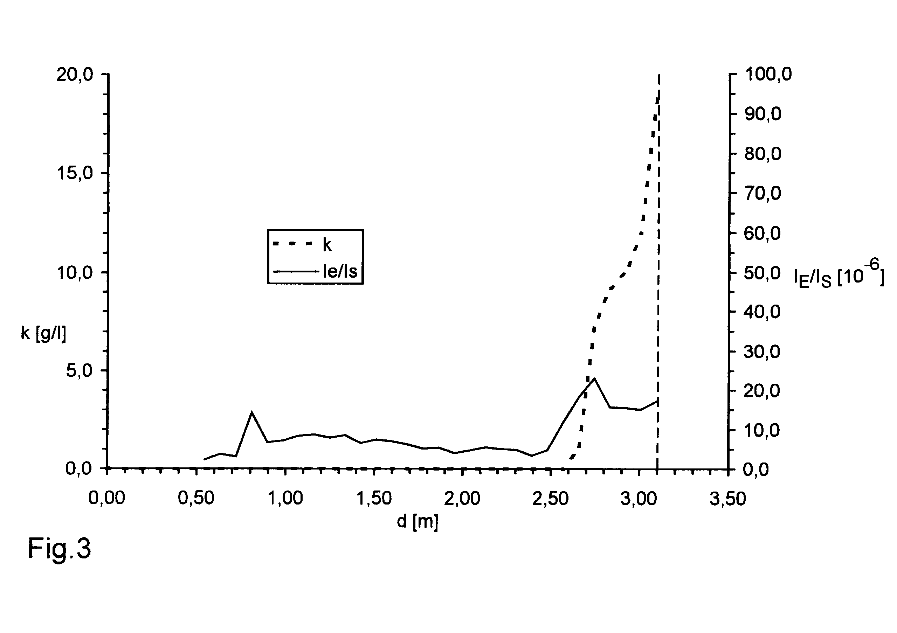

Dieses Schallsignal wird an den einzelnen Festkörperpartikeln in der Flüssigkeit teilweise rückgestreut und darüber hinaus an Dichtegradienten in der Flüssigkeit reflektiert, so daß ein Echosignal entsteht, dessen Intensitätsverlauf detailliert in Figur 3 dargestellt ist. Die horizontale Achse gibt hierbei die Beckentiefe d an, in der das Echosignal erzeugt wurde, während auf der senkrechten Achse zum einen die Feststoffkonzentration k und zum anderen die Intensität des Echosignals im Verhältnis I_{E}/Iₛ aufgetragen ist.

Dieses Echosignal läuft dann wieder nach oben in Richtung des Ultraschall-Übertragers 9, der nun als Schallempfänger arbeitet und das Echosignal erfaßt. Das empfangene Echosignal wird dann zunächst einem Eingangsverstärker 10 zugeführt und anschließend über einen Gleichrichter 11 einem Tiefpaßfilter 12 zur Glättung zugeführt. Das Tiepaßfil-ter 12 ist ausgangsseitig mit einem Analog/Digital-Wandler 13 verbunden, der ein digitales Signal I_{E} erzeugt, das die Intensität des Echosignals wiedergibt.

Das Echosignal I_{E} wird dann einer Recheneinheit 14 (engl. ALU - arithmetical logical unit) zugeführt, welche die Entfernungsabschwächung des Echosignals IE kompensiert, um nachfolgend die Auswirkungen der Feststoffkonzentration auf das Echosignal isoliert betrachten zu können. Die Entfernungsabschwächung des Echosignals I_{E} rührt zum einen daher, daß das Schallsignal in der Flüssigkeit eine Dämpfung erfährt, so daß die Signalstärke mit der Signallaufstrecke exponentiell abnimmt. Zum anderen breitet sich das Schallsignal in der Flüssigkeit außerhalb des Nahfeldes näherungsweise kugelförmig aus, so daß die Intensität des Schallsignals zusätzlich mit der Signallaufstrecke quadratisch abnimmt. Die Recheneinheit 14 verstärkt deshalb die relativ spät eintreffenden Echosignale, während die relativ früh eintreffenden Echosignale entsprechend abgeschwächt werden. Die hierfür erforderliche Bestimmung der Signallaufzeit erfolgt durch einen Zeitmesser 15, der bei der Abgabe des Schallsignals durch den Impulsgenerator 5 zurückgesetzt wird und während der Signallaufzeit die Taktzyklen des Oszillators 7 zählt. Am Ausgang des Zeitmessers 15 erscheint also die seit der Abgabe des Schallsignals verstrichene Signallaufzeit At des Echosignals. Zur Kompensation der entfernungsabhängigen Abschwächung verrechnet die Recheneinheit 14 die gemessene Signallaufzeit Δt mit einer quadratischen Funktion und multipliziert damit das gemessene Echosignal I_{E}, so daß am Ausgang der Recheneinheit 14 ein von Entfernungsabschwächungen weitgehend befreites Echosignal I_{KORR} erscheint.

Bei der Bestimmung der Phasengrenze zwischen der Klarphase 1 und der darunter befindlichen Schlammphase 2 wird die Tatsache ausgenutzt, daß die Intensität des Echosignals von der Feststoffkonzentration in der Flüssigkeit abhängt. Zum einen wird das in die Flüssigkeit eingekoppelte Schallsignal an einer Dichteänderung in der Flüssigkeit reflektiert, wobei die Intensität des resultierenden Echosignals proportional dem Dichtegradienten ist. Zum anderen wirken die einzelnen Feststoffpartikel in der Flüssigkeit als Streuzentren, so daß ein Teil des eingekoppelten Schallsignals als Echosignal rückgestreut wird, wobei die Intensität des Echosignals von der Feststoffkonzentration abhängt.

An der Phasengrenze weist das Echosignal also einen starken Intensitätsgradienten auf, was eine Erkennung der Phasengrenze in dem Echosignal ermöglicht, da der maximale Intensitätsgradient des Echosignals durch die Phasengrenze verursacht wird. Die Phasengrenze ist in Figur 3 an dem starken Anstieg des Echosignals in einer Tiefe von d=2,5...2,7 m erkennbar, während der Boden des Absetzbekkens bei einer Tiefe von d=3,1 m liegt. Das fehlerkompensierte Echosignal wird deshalb einem Differenzierer 16 zugeführt, der die zeitliche Änderung der Echosignalstärke I_{KORR} bestimmt. Während des Meßvorgangs wird dann die maximale Steigung der Echosignalstärke I_{KORR} bestimmt, die jeweils in einem Zwischenspeicher 17 festgehalten wird.

Hierzu ist eine Vergleichereinheit 18 vorgesehen, die den aktuellen Steigungswert dI_{KORR}/dt der Echosignalstärke I_{KORR} mit dem bisherigen Maximalwert der Steigung der Echosignalstärke I_{KORR} vergleicht. Übersteigt der aktuelle Steigungswert den bisherigen Maximalwert, so gibt die Vergleichereinheit 18 ein Steuersignal RD (Read Data) an den Zwischenspeicher 17, der eingangsseitig mit dem Differenzierer 16 verbunden ist und daraufhin den neuen Maximalwert zwischenspeichert. Darüber hinaus wird das beim Erreichen eines neuen Maximalwerts von der Vergleichereinheit 18 erzeugte Steuersignal RD über ein UND-Gatter 19 einem weiteren Zwischenspeicher 20 zugeführt, der daraufhin die zugehörige Signallaufzeit Δt von dem Zeitmesser 15 aufnimmt und zwischenspeichert, um nachfolgend die Entfernung d zwischen dem Schallsender 9 und der Phasengrenze berechnen zu können. Am Ende des Meßvorgangs enthält der Zwischenspeicher 17 dann die maximale Steigung der Echosignalstärke I_{KORR}, während der Zwischenspeicher 20 die zugehörige Signallaufzeit Δt enthält, die dann einer Recheneinheit 21 zugeführt wird, die aus der ermittelten Signallaufzeit Δt und der vorgegebenen Schallgeschwindigkeit c in der Flüssigkeit die Entfernung d zwischen dem Schallsender 9 und der Phasengrenze berechnet, die dann schließlich über eine Anzeigeeinheit 22 ausgegeben wird.

Die Speicherung der aktuellen Signallaufzeit Δt in den Zwischenspeicher 20 erfolgt jedoch nur dann, wenn die Vergleichereinheit 18 anzeigt, daß die aktuelle Steigung der Echosignalstärke I_{KORR} den bisherigen Maximalwert übersteigt und dieser Zeitpunkt darüber hinaus in einem von einer Freigabeschaltung 23 freigegebenen Zeitfenster liegt. Auf diese Weise ist es möglich, bestimmte Zeitfenster während des Meßvorgangs für die Auswertung des Echosignals zu sperren, wodurch sich vorteilhaft Festkörperechos unterdrücken lassen, die in dem Absetzbecken 3 beispielsweise durch Reflexionen am Beckenboden oder an Rohrleitungen entstehen können und andernfalls fehlerhaft als Phasengrenze erkannt würden. Die Freigabeschaltung 23 erhält deshalb von dem Zeitmesser 15 die aktuelle Signallaufzeit Δt und erzeugt nur während vorgegebener Zeitfenster ein Freigabesignal ENABLE, das dem UND-Gatter 19 zugeführt wird und somit die Weiterleitung des Steuersignals von der Vergleichereinheit 18 zu dem Zwischenspeicher 20 und damit die Zwischenspeicherung des aktuellen Steigungswerts ermöglicht.

Wie Figur 1 weiterhin zu entnehmen ist, ist eine Reinigungssteuerung 30 vorgesehen, die mit dem Amplitudenmodulator 6, dem Oszillator 7, dem Leistungsverstärker 8 und dem Eingangsverstärker 10 verbunden ist. Die Reinigung des Ultraschall-Übertragers 9 erfolgt dabei durch eine energiereiche Schallanregung des Ultraschall-Übertragers 9, indem bei einer geeigneten Anregungsfrequenz energiereiche Transversalwellen auf der verschmutzten Schallaus- und -eingangsoberfläche des Ultraschall-Übertragers 9 gerichtet werden. Die Reinigungsfrequenz liegt dabei um etwa 30 kHz unterhalb der Arbeitsfrequenz des Schallsenders. Hierzu wird einfach die Oszillatorfrequenz gesteuert von der Reinigungssteuerung 30 entsprechend auf die Reinigungsfrequenz herabgesetzt und die Verstärkung des Leistungsverstärkers 8 gesteuert von der Reinigungssteuerung 30 entsprechend heraufgesetzt. Gleichzeitig wird für die Zeit der Reinigung der Eingangsverstärker 10 ausgeschaltet oder seine Verstärkung zumindest weit herabgesetzt, um die Auswertungseinheit nicht zu überlasten.

Zur Reinigung führt die Reinigungssteuerung 30 dem Amplitudenmodulator 6 einen der erforderlichen Reinigungsdauer entsprechenden rechteckförmigen Impuls zu, der Amplitudenmodulator 6 moduliert diesen Impuls auf ein sinusförmiges Trägersignal mit der Reinigungsfrequenz auf, das von dem Oszillator 7 erzeugt wird.

Die Betätigung der Reinigungssteuerung 30 erfolgt im gezeigten Beispiel in bestimmten Zeitintervallen. Es versteht sich jedoch, daß die Reinigung bei anderen erfindungsgemäßen Ausführungen auch auf manuelle Betätigung hin oder in Abhängigkeit von der dann durch entsprechende Einrichtungen erfaßten Verschmutzung des Ultraschall-Übertragers erfolgen kann.

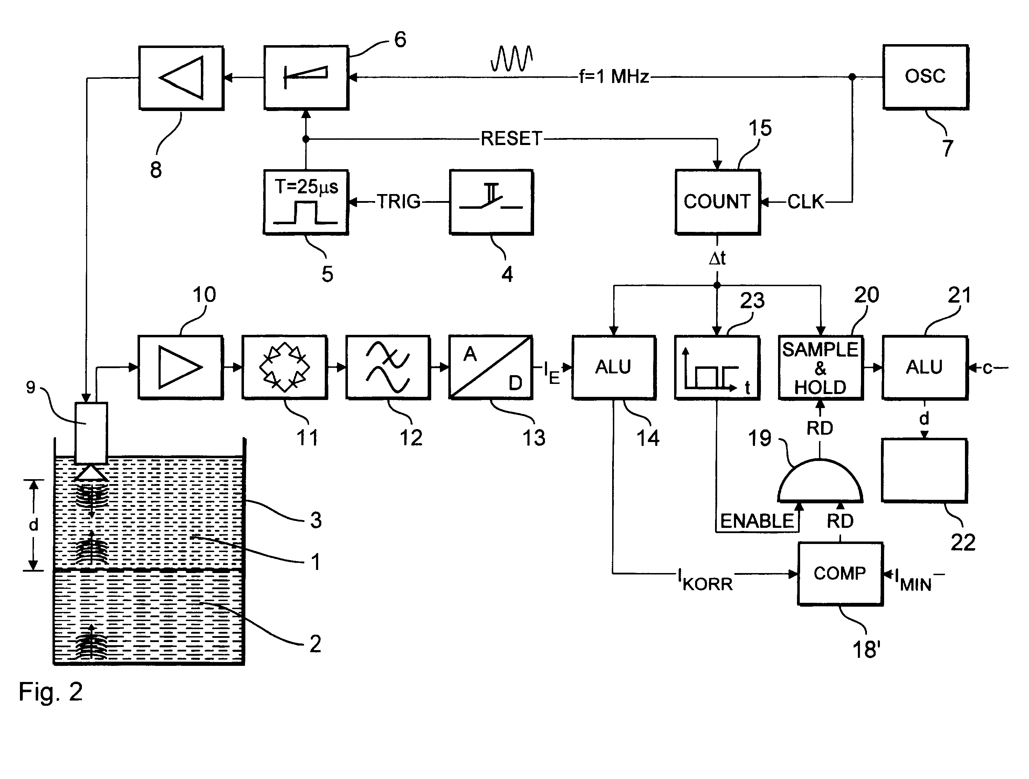

Figur 2 zeigt ein alternatives Ausführungsbeispiel der Erfindung, das weitgehend mit dem vorstehend beschriebenen Ausführungsbeispiel übereinstimmt, so daß funktionsgleiche Baugruppen durch dieselben Bezugszeichen wie in Figur 1 gekennzeichnet sind und diesbezüglich auf die Beschreibung zu Figur 1 verwiesen wird.

Der wesentliche Unterschied zu dem vorstehend beschriebenen und in Figur 1 dargestellten Ausführungsbeispiel besteht darin, daß hierbei nicht die Änderung der Signalstärke des Echosignals beurteilt wird, sondern die Signalstärke des Echosignals selbst. Das Ausgangssignal der Recheneinheit 14 wird deshalb direkt einer Vergleichereinheit 18' zugeführt, welche die fehlerkompensierte Signalstärke I_{KORR} des Echosignals mit einem vorgegebenen Grenzwert I_{MIN} vergleicht und beim Überschreiten des Grenzwerts IMIN ein Freigabesignal RD erzeugt, das über das UND-Gatter 19 dem Zwischenspeicher 20 zugeführt wird, der daraufhin die aktuelle Signallaufzeit Δt für eine spätere Berechnung des Abstandes zwischen dem Schallsender 9 und der Phasengrenze zwischenspeichert.

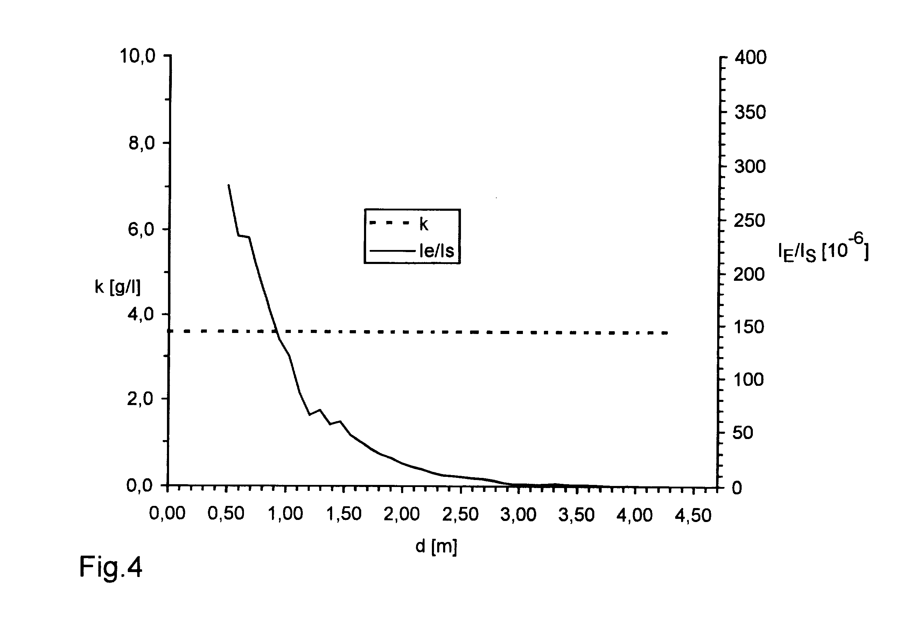

Figur 4 zeigt schließlich den Verlauf der Echosignalstärke als Funktion der Beckentiefe d für ein Belebtschlammbekken, in dem die Feststoffkonzentration k weitgehend konstant ist. Aus dem Diagramm ist ersichtlich, daß die Signalstärke des Echosignals mit der Beckentiefe nahezu exponentiell abnimmt, was auf Entfernungsabschwächungen zurückzuführen ist, wie vorstehend eingehend erläutert wurde.

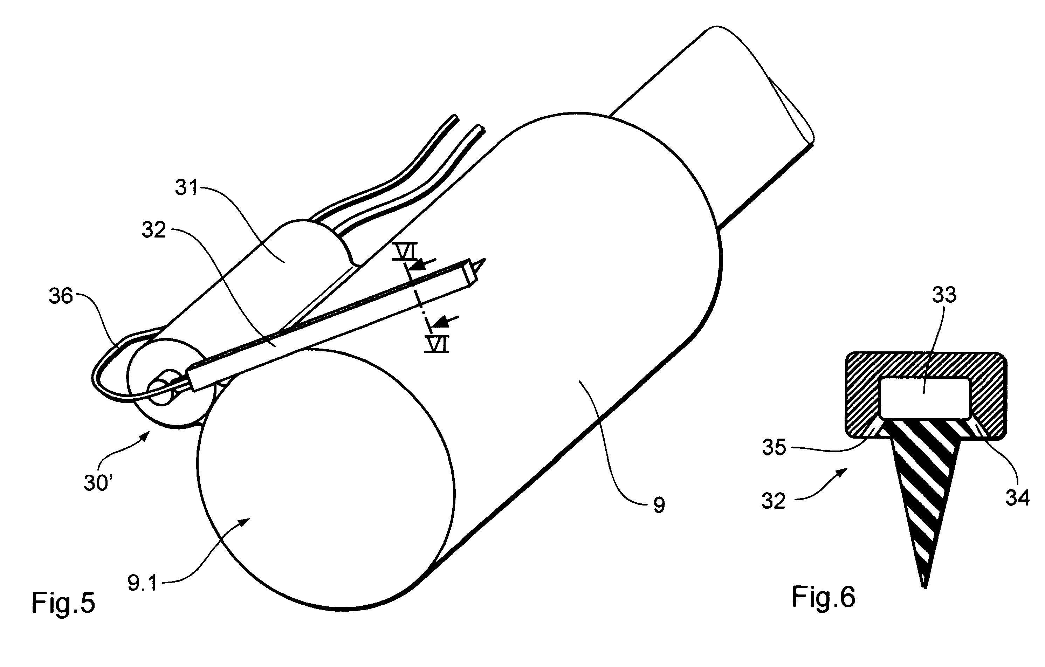

In Figur 5 ist eine Wischervorrichtung 30' zur Reinigung eines Ultraschall-Übertragers 9 dargestellt. Die Wischervorrichtung besteht dabei aus einem seitlich an dem zylinderförmigen Ultraschall-Übertrager 9 angeordneten Motor 31, auf dessen Welle ein Wischerblatt 32 befestigt ist, das zur Reinigung der Signalaus- und -eintrittsfläche 9.1 des Ultraschall-Übertragers 9 dient. Zur Reinigung der Signalaus- und -eintrittsfläche 9.1 überstreicht das Wischerblatt 32 wie einen Scheibenwischer die Signalaus- und -eintrittsfläche 9.1.

Wie der Figur 5 und der Figur 6 zu entnehmen ist, die einen Schnitt durch das Wischerblatt 32 zeigt, weist das Wischerblatt 32 zur Erhöhung der Reinigungswirkung einen Längskanal 33 mit über dessen Länge verteilt angeordneten Auslaßöffnungen 34, 35 auf. Diese Auslaßöffnungen 34, 35 lenken während der Reinigung über eine Zuleitung 36 zugeführte Waschflüssigkeit auf die zu reinigende Signalaus- und -eintrittsfläche 9.1. Es versteht sich, daß bei anderen vorteilhaften Ausführungen der Erfindung zur Verbesserung der Reinigungswirkung auch der mechanische Wischer mit einer Schallreinigung kombiniert sein kann, wie sie etwa zu Figur 1 beschrieben wurde.

Nach einer vom Verschmutzungsgrad des Ultraschall-Übertragers 9 abhängigen Reinigungszeit wird der Motor 31 abgestellt. Solange nicht gereinigt wird, befindet sich das Wischerblatt in der in Figur 5 dargestellten Stellung, in der es die Signalaus- und -eintrittsfläche 9.1 nicht verdeckt, um einen störungsfreien Betrieb der Vorrichtung sicherzustellen.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch bei grundsätzlich anders gearteten Ausführungen Gebrauch macht.

## Patentansprüche

1. Vorrichtung zur Bestimmung der Tiefe der Phasengrenze zwischen einer feststoffarmen Klarphase (1) und einer darunter befindlichen feststoffreichen Phase (2) in einer Flüssigkeit, insbesondere zur Bestimmung des Schlammpegels in einem Absetzbecken (3) einer Kläranlage, mit einem unterhalb des Flüssigkeitsspiegels angeordneten Sender (9) zur Abgabe eines Meßsignals in die Flüssigkeit und einem unterhalb des Flüssigkeitsspiegels angeordneten Empfänger (9) zur Aufnahme des in Abhängigkeit von der Feststoffkonzentration in der Flüssigkeit veränderten Meßsignals,
**dadurch gekennzeichnet,**
daß der Sender ein Schallsender (9) ist, der zur Abgabe eines hochfrequenten Schallimpulses als Meßsignal eingangsseitig mit einem Impulsgenerator (5 bis 8) verbunden ist,
daß der Empfänger ein Schallempfänger (9) ist, der zur Erfassung eines durch Reflexion und/oder Rückstreuung des Schallimpulses in der Flüssigkeit erzeugten Echosignals in derselben Phase (1) angeordnet ist wie der Schallsender (9),
daß der Schallempfänger (9) zur Erkennung des durch Reflexion und/oder Rückstreuung an der Phasengrenze erzeugten Echosignals ausgangsseitig mit einer Auswertungseinheit (10 bis 23) verbunden ist,
daß zur Messung der Signallaufzeit zwischen der Abgabe des Schallimpulses und der Aufnahme des Echosignals ein Zeitmesser (15, 20) vorgesehen ist, der zum Starten der Zeitmessung bei der Abgabe des Schallimpulses eingangsseitig mit dem Impulsgenerator (5 bis 8) verbunden ist.

2. Vorrichtung nach Anspruch 1, **dadurch gekennzeichnet,** daß die Auswertungseinheit (10 bis 23) eine Vergleichereinheit (18') aufweist, die zum Vergleich der Signalstärke des Echosignals mit einem vorgegebenen Grenzwert eingangsseitig mit dem Schallempfänger (9) und zum Anhalten der Zeitmessung beim Überschreiten des Grenzwerts ausgangsseitig mit dem Zeitmesser (15, 20) verbunden ist, oder
daß die Auswertungseinheit (10 bis 23) einen Differenzierer (16) aufweist, der zur Bestimmung der zeitlichen Änderung der Stärke des Echosignals eingangsseitig mit dem Schallempfänger (9) verbunden ist, und die Auswertungseinheit (10 bis 23) eine Vergleichereinheit (18) aufweist, die zum Vergleich der jeweils aktuellen zeitlichen Änderung des Echosignals mit einem vorgegebenen Grenzwert oder mit den zuvor gemessenen Werten der zeitlichen Änderung eingangsseitig mit dem Differenzierer (16) verbunden ist.

3. Vorrichtung nach Anspruch 1 oder 2, **dadurch gekennzeichnet,** daß die Auswertungseinheit (10 bis 23) zur Kompensation der Entfernungsabschwächung des Echosignals eine Recheneinheit (14) aufweist, die zur Berücksichtigung der jeweiligen Signallaufstrecke bei der Kompensation eingangsseitig mit dem Zeitmesser (15) verbunden ist.

4. Vorrichtung nach einem der vorhergehenden Ansprüche, **dadurch gekennzeichnet**, daß der Schallsender ein Ultraschallsender (9) ist.

5. Vorrichtung nach einem der vorhergehenden Ansprüche, **dadurch gekennzeichnet**, daß der Schallsender und der Schallempfänger in einem Bauteil (9) integriert sind.

6. Vorrichtung nach Anspruch 5, **dadurch gekennzeichnet,** daß eine Reinigungsvorrichtung für das den Schallsender und -empfänger enthaltende Bauteil (9) vorgesehen ist.

7. Vorrichtung nach Anspruch 6, **dadurch gekennzeichnet**, daß die Reinigungsvorrichtung am Bauteil (9) angeordnet ist und nach Art eines Wischers ausgebildet ist und/oder
daß zur Reinigung des Bauteils (9) durch vom Schallsender auf die Oberfläche des Bauteils (9) übertragene energiereiche Transversalwellen einer geeigneten Anregungsfrequenz eine Reinigungssteuerung (30) vorgesehen ist, die zur Erzeugung der energiereichen Transversalwellen mit dem Impulserzeuger (5 bis 8) verbunden ist sowie vorzugsweise zur Abschaltung der Auswertungseinheit (10 bis 23) während der Reinigung mit der Auswertungseinheit (10 bis 23) verbunden ist.

8. Verfahren zur Bestimmung der Tiefe der Phasengrenze zwischen einer feststoffarmen Klarphase (1) und einer darunter befindlichen feststoffreichen Phase (2) in einer Flüssigkeit, insbesondere zur Bestimmung des Schlammspiegels im Absetzbecken (3) einer Kläranlage,
bei dem durch einen Sender (9) ein Meßsignal in die Flüssigkeit abgegeben und durch einen Empfänger (9) das in Abhängigkeit von der Feststoffkonzentration in der Flüssigkeit veränderte Meßsignal erfaßt wird, **dadurch gekennzeichnet**,
daß als Sender ein Schallsender (9) verwendet wird, der als Meßsignal einen hochfrequenten Schallimpuls abgibt,
daß als Empfänger ein Schallempfänger (9) verwendet wird, der zur Erfassung eines durch Reflexion und/oder Rückstreuung in der Flüssigkeit erzeugten Echosignals in derselben Phase (1) der Flüssigkeit angeordnet wird wie der Schallsender (9),
daß die Stärke des Echosignals oder die zeitliche Änderung des Echosignals zur Erkennung des durch Reflexion und/oder Rückstreuung an der Phasengrenze erzeugten Echosignals mit einem vorgegebenen Grenzwert oder mit zuvor gemessenen Werten verglichen wird,
daß zur Bestimmung des Abstandes zwischen dem Schallsender (9) und der Phasengrenze die Signallaufzeit zwischen der Abgabe des Schallimpulses und dem Empfang des Echosignals gemessen wird.

9. Verfahren nach Anspruch 8, **dadurch gekennzeichnet,** daß in Abhängigkeit von der gemessenen Signallaufzeit zwischen der Abgabe des Schallimpulses und dem Empfang des Echosignals ein Korrekturwert berechnet wird und das Echosignal vor dem Vergleich zur Kompensation der Entfernungsabschwächung mit dem Korrekturwert multipliziert wird.

10. Verfahren nach einem der Ansprüche 8 oder 9, **dadurch gekennzeichnet,** daß das Echosignal vor dem Vergleich gleichgerichtet und/oder geglättet und/oder digitalisiert wird.

11. Verfahren nach einem der Ansprüche 8 bis 10, **dadurch gekennzeichnet**, daß nacheinander mehrere Schallimpulse abgegeben werden und jeweils die Signallaufzeit des Echosignals zwischen der Abgabe des Schallimpulses und dem Empfang des von einer Reflexion und/oder Rückstreuung an der Phasengrenze herrührenden Echosignals gemessen und anschließend ein Mittelwert der gemessenen Signallaufzeiten berechnet wird.

12. Verfahren nach einem der Ansprüche 8 bis 11, **dadurch gekennzeichnet**, daß die Sendeamplitude des Schallsenders (9) gemessen wird und die Sendefrequenz so eingestellt wird, daß die Sendeamplitude maximal wird.

13. Verfahren nach einem der Ansprüche 8 bis 12, **dadurch gekennzeichnet,** daß das den Schallsender und -empfänger enthaltende Bauteil (9) einer Reinigung, insbesondere in vorgebbaren Zeitintervallen, unterzogen wird.

14. Verfahren nach Anspruch 13, **dadurch gekennzeichnet,** daß die Reinigung durch eine Wischervorrichtung erfolgt, wobei, vorzugsweise unter Einsatz einer Waschflüssigkeit, Verschmutzungen des Bauteils (9) mechanisch entfernt werden,
und/oder
daß die Reinigung durch Schallanregung erfolgt, wobei bei einer geeigneten Anregungsfrequenz energiereiche Transversalwellen vom Schallsender (9) auf die Oberfläche des Bauteils (9) übertragen werden.
